# EUROPEAN PATENT SPECIFICATION

(11) **EP 0 504 685 B1**
(45) Date of publication and mention of the grant of the patent: **21.01.1998**
(21) Application number: 92103913.7
(22) Date of filing: 07.03.1992
(51) Int. Cl.: F16L 37/08, F16L 41/14, E03C 1/22

(54) **Connector pipe**
Rohrverbinder
Connecteur pour tuyau

(30) Priority: 11.03.1991 SE 9100710
(43) Date of publication of application: 23.09.1992
(73) Proprietor: AB SJÖBO BRUK, S-275 21 Sjöbo (SE)
(72) Inventor: Andersson, Leif Eskil, S-275 35 Sjöbo (SE)
(74) Representative: Rottmann, Maximilian R.

(56) References cited:
- CH-A- 581 799
- DE-A- 2 550 202
- FR-A- 2 467 921
- US-A- 3 742 525
- US-A- 4 676 533

## Description

The present invention relates to a connector pipe as defined in the preamble of the claim.

A connector pipe of this type is substantially already known from e.g. DE-A-25 50 202. The connecting portion in said prior art construction however, does not have a satisfactory function. Complete withdrawal of the feed pipe is not prevented. Nor is it possible, to prevent complete withdrawal, to get an indication of where the end portion of said feed pipe is situated in the connector pipe. Furthermore, the end surfaces limiting the connecting portion in the prior art construction of DE-A--25 50 202 are designed so that the elastic ring in said connecting portion during insertion of the feed pipe, might be moved past the end surface of said connecting portion facing away from the direction of insertion of the feed pipe.

The object of the present invention is inter alia to eliminate these drawbacks at the prior art construction of DE-A-25 50 202 and provide a connector pipe with a connecting portion having at least a reliable locking effect on the feed pipe as well as on the elastic ring. This is arrived at according to the invention by providing, in combination, the connecting portion of the connector pipe with the characterizing features of the claim.

Designed as defined in the claim, the connecting portion of the connector pipe is now capable of preventing complete withdrawal of the feed pipe from the connector pipe, preventing displacement of the elastic ring out of the connecting portion and permitting a compact short design of the connecting portion and thus, of the connector pipe.

The above characterizing features of the connecting portion of the connector pipe according to the invention will be further described below with reference to the accompanying drawings, in which
figure 1 in principal illustrates how the connector pipe can be used at a floor drain; and
figures 2-4 with longitudinal sections illustrates different stages in the function of the connector pipe.

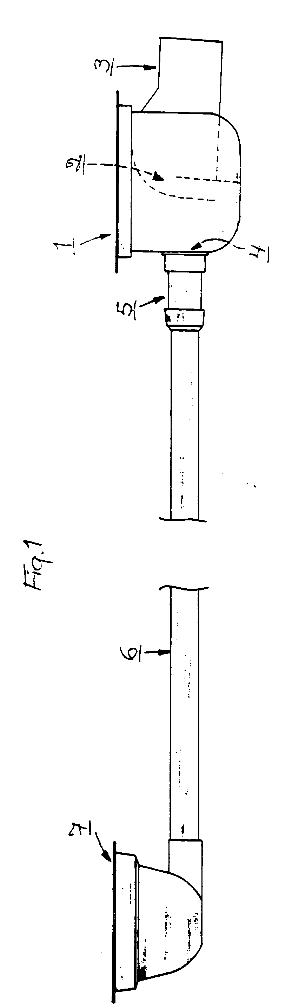

Thus, the present invention relates to a connector pipe for connection thereof and a feed pipe for waste water to each other such that they can move in axial direction relative to each other without gliding apart, and for connecting said connector pipe to a side inlet to a floor drain. Fig. 1 illustrates how the connector pipe can be used at a floor drain 1 of conventional type including a water seal 2, a discharge 3 and one or more, here one, side inlet 4. Thus, the connector pipe 5 is at one end connected with the side inlet 4 to the floor drain 1, while the other end of said connector pipe 5 is connected with the feed pipe 6 for waste water, which feed pipe connects the discharge 7 from e.g. a shower cabin, bath tub, etc. with the floor drain 1.

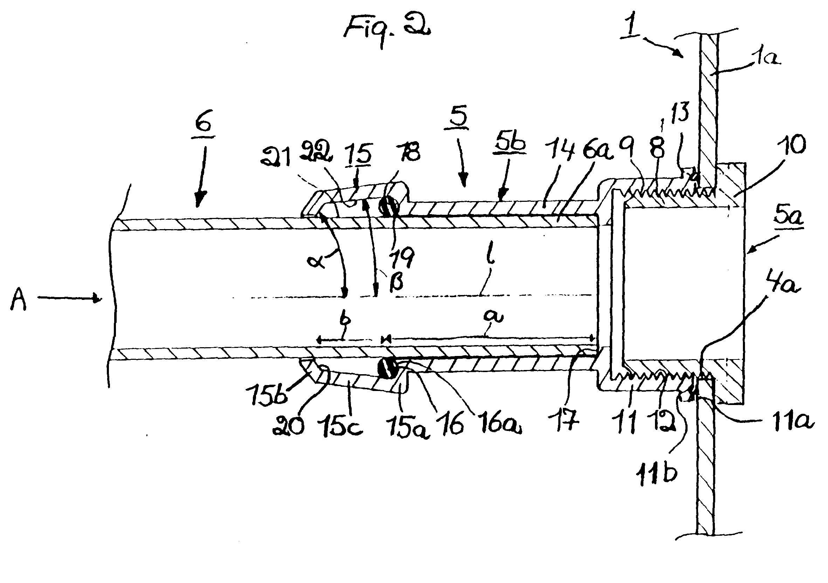

Figs. 2-4 illustrate with a vertical longitudinal section and enlarged view the connector pipe 5 according to the invention, the feed pipe 6, the side inlet 4 and wall portions la of the floor drain 1 lying close to said side inlet, and shows how the connection between the connector pipe 5 and the feed pipe 6 functions when they are connected together.

The connector pipe 5 consists of two members, namely one member 5a which comprises a pipe socket 8 with external threads 9 and an end flange 10, whereby said pipe socket is insertable through the side inlet opening 4a in the floor drain 1 with the end flange disposed in the floor drain, eventually in grooves or recesses (not shown) in the wall portions la to the floor drain, and another member 5b including a pipe portion 11 with internal threads 12, whereby this latter member 5b can be screwed onto said first member until these members are clamped onto the floor drain. A sealing in the shape of an O-ring 13 of elastic material can be provided on the pipe socket 8 of said first member 5a of the connector pipe 5 or as is shown in a groove llb in the end surface lla of the pipe portion 11 of said second member 5b, and is compressed, when screwing said second member 5b onto said first member 5a, between said end surface lla of the pipe socket 11 of said second member 5b and the outer side of said wall portions 1a to the floor drain 1.

The member 5b of the connector pipe 5 also comprises, apart from the pipe socket 11, a tubular intermediate portion 14 with a somewhat smaller diameter than said pipe socket 11 and a connecting portion 15 into which the feed pipe 6 is inserted. The connecting portion 15 also has a somewhat larger diameter than the intermediate portion 14, but tapers towards its free end, i.e. in the direction of withdrawal of the feed pipe 6. A ring 16 having preferably a circular cross-sectional area and made of elastic material is provided in the connecting portion 15 and said ring is formed such that it is located in an inner position in the widest part 15a of the connecting portion 15. This inner position is shown in fig. 2.

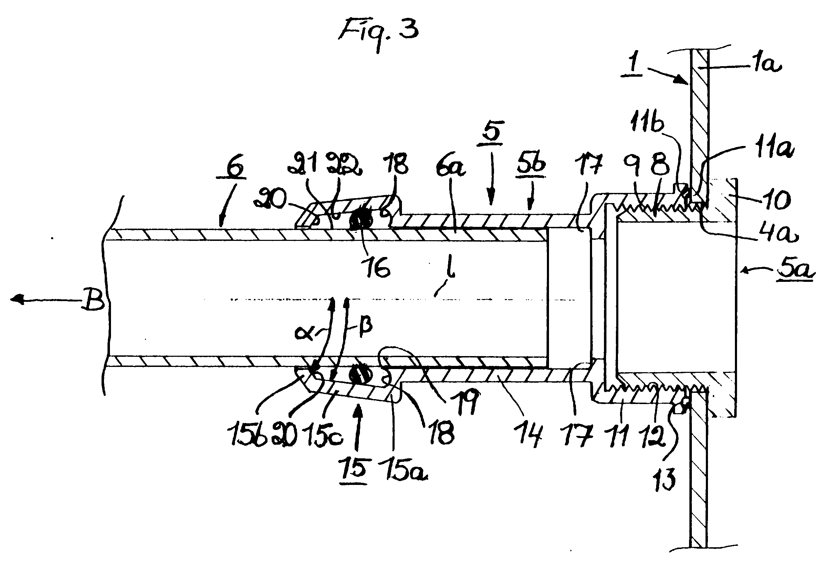

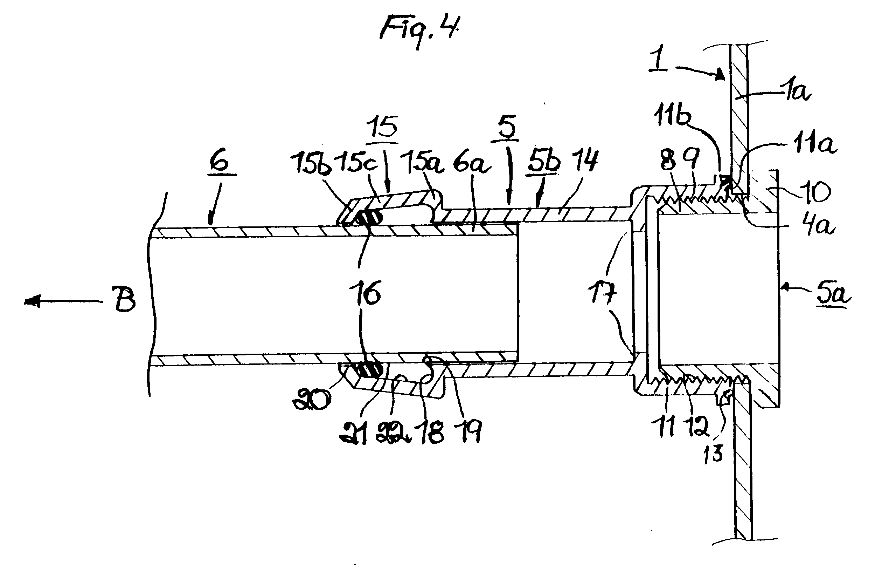

From fig. 2 it is also apparent that when the ring 16 is situated in the illustrated inner position in the widest part 15a of the connecting portion 15, then the feed pipe 6 can be inserted into said connecting portion, through the ring and into the tubular intermediate portion 14 of the connector tube 5. The direction of insertion of the feed pipe 6 is designated A in fig. 2. Since the inner diameter of the ring 16 is somewhat smaller than the outer diameter of the feed pipe 6 or at least smaller than the outer diameter on that part thereof which is inserted into the ring, the ring engages the feed pipe with a certain force when said feed pipe is inserted into the connector pipe 5. The feed pipe 6 can be inserted into the ring 16 so far that an end portion 6a of said feed pipe situated within said ring remains within said ring when the ring, due to its engagement with the feed pipe, has been drawn to an outer position towards which it is drawn when said feed pipe is moved in its direction of withdrawal. Insertion is carried out preferably until the feed pipe 6 contacts a stop surface 17 provided in the connector pipe 5. In the embodiment shown, the stop surface 17 is formed in the transition between the tubular intermediate portion 14 and the pipe portion 11, whereby insertion of the feed pipe 6 is allowed to a sufficient extent according to the above. The stop surface 17 is namely then situated at a distance a from the ring 16 in its inner position, which is at least twice as great as the distance b the ring can move in the connecting portion 15 from its inner position to the outer position when the feed pipe 6 is displaced in its direction of withdrawal. This is due to the fact that the connecting portion 15 is designed such that it through its tapering shape, effects the ring 16 about the feed pipe 6 more and more so that, when said feed pipe is moved in its direction of withdrawal, the ring rolls thereon while it at the same time is drawn towards its outer position, whereby the ring is displaced about half the distance of withdrawal of the feed pipe. The direction of withdrawal of the feed pipe 6 is designated B in figs. 3 and 4.

From figs. 3 and 4 it is also apparent that the connecting portion 15 is further designed such that the ring 16, when said ring is displaced towards its outer position by the feed pipe 6, is deformed to an increasingly longitudinal, here preferably oval cross-sectional shape, the closer the ring comes to said outer position, while said ring is compressed between the outer side 21 of the feed pipe and the tapering inner side 22 of the connecting portion. Hereby, the ring 16 is brought to engage and take hold of the feed pipe 6 with an increasingly stronger force the closer the ring gets to its outer position, such that the sealing provided by the ring gets stronger and stronger, the longer the feed pipe is withdrawn. Fig. 4 shows the ring 16 in its outer position. The feed pipe 6 can not be withdrawn any further and the ring 16 maximizes its sealing effect. The feed pipe 6 can be moved axially inwards, in the direction of insertion A thereof, if required, with the sealing effect preserved. A sealing according to the above permits use of standard pipes as a feed pipe 6 which without any amendment or modification can be connected with the connector pipe 5.

For allowing the ring 16 to be set in its inner position in the widest part 15a of the connecting portion 15, this part has a seat 18 for the ring. The seat 18 is designed such that the ring 16 can not be moved beyond the seat when the feed pipe 6 is inserted into the connector pipe 5. In order to prevent the ring from being moved backwards beyond the seat 18 and yet permit it to engage the feed pipe 6 at insertion thereof into the connector pipe 5, the width of the seat 18 is only somewhat smaller than the width of the portion 16a of the ring 16 engaging said seat and the seat includes an inner edge 19 which is turned against the direction of insertion A of the feed pipe. Since the ring 16 in the embodiment shown has a circular cross-sectional area, the shape of the seat 18 is adapted thereto. Thus, the seat 18 is substantially cupped in cross section.

For preventing the connecting portion 15 from attaining a too lengthy tapering shape and for providing a distinct stop for the ring 16 in its outer position (fig. 4), the opposite narrowest part 15b of the connecting portion 15 is provided with an end surface 20 which has a larger angle α relative to the longitudinal axis 1 of the connecting portion than the tapering surfaces 22 of said connecting portion behind said end surface 20. The angle β between the surfaces 22 in the tapering part 15c of the connecting portion 15 and the longitudinal axis 1 of said connecting portion is 4-10°, preferably 7°.

It should also be noted that the connector pipe according to the invention is made of e.g. plastics or metal.

## Claims

1. Connector pipe which is connected to a feed pipe for waste water such that said feed pipe (6) and said connector pipe (5) can move in axial direction relative to each other without gliding apart, which is connected with a side inlet (4) to a floor drain (1) and which consists of two members (5a and 5b),
whereby one of these members (5a) includes
a pipe socket (8) with external threads (9) and an end flange (10), said pipe socket (8) being inserted through a side inlet opening (4a) in the floor drain (1) with the end flange (10) disposed in said floor drain (1), and
whereby the other of said members (5b) comprises
a pipe portion (11) with internal threads (12), said pipe portion (11) being screwed onto the pipe socket (8) of the first member (5a) until both members are clamped onto the floor drain (1),
a connecting portion (15) into which the feed pipe (6) is inserted and in which a ring (16) of elastic material is provided, said ring (16) being formed such that when positioned in an inner portion in said connecting portion (15), insertion of said feed pipe (6) into the ring is accomplished while at the same time the ring engages the feed pipe (6) inserted therein so that said ring is drawn towards an outer position when said feed pipe is moved in its direction of withdrawal (B), and
a stop surface (17) for the feed pipe (6) which is located at a distance (a) from the ring (16) in its inner position in the connecting portion (15) which is at least twice as large as the distance (b) said ring (16) can move in said connecting portion (15) so that, when the feed pipe (6) during insertion thereof into the ring (16) contacts said stop surface, an end portion (6a) of said feed pipe (6) situated within said ring remains within said ring when the ring has been drawn to its outer position and thus, further withdrawal of said feed pipe (6) is prevented,
**characterized in**
that the connecting portion (15), in combination,
tapers in the direction of withdrawal (B) of the feed pipe (6), whereby the ring (16), due to the tapering shape of the connecting portion (15), is deformed when said ring (16) is moved towards its outer position so that said ring engages and takes hold of the feed pipe (6) with an increasingly stronger force,
is provided with a cup-shaped seat (18) for the ring (16) in the widest part (15a) thereof, whereby the axial width of the seat (18) is smaller than the width of the portion (16a) of the ring engaging said seat (18) and whereby said seat (18) includes an inner radial edge (19) which is turned against the direction of insertion (A) of the feed pipe (6), and
is provided with an end surface (20) in the narrowest part (15b) thereof, having a larger angle (α) relative to the longitudinal axis (1) of the connecting portion (15) than the tapering surfaces (22) of said connecting portion (15) behind said end surface (20).

## Patentansprüche

1. Verbindungsrohr, welches derart an ein Abwasser-Zufuhrrohr angeschlossen ist, dass sich jenes Zufuhrrohr (6) und jenes Verbindungsrohr (5) relativ zueinander in axialer Richtung bewegen können, ohne auseinander zu gleiten, welches mit einem seitlichen Einlass (4) eines Bodenablasses (1) verbunden ist und welches aus zwei Teilen (5a und 5b) besteht,
wobei eines dieser Teile (5a) umfasst:
eine Rohrfassung (8) mit einem Aussengewinde (9) und einem endseitigen Flansch (10), wobei jene Rohrfassung (8) derart durch eine seitliche Einlassöffnung (4a) in den Bodenablass (1) eingesetzt ist, dass der endseitige Flansch (10) in jenem Bodenablass (1) angeordnet ist, und
wobei das andere dieser Teile (5b) umfasst:
einen Rohrabschnitt (11) mit Innengewinde (12), wobei jener Rohrabschnitt (11) soweit auf die Rohrfassung (8) des ersten Teils (5a) aufgeschraubt ist, bis beide Teile klemmend am Bodenablass (1) befestigt sind;
einen Befestigungsabschnitt (15), in welchen das Zufuhrrohr (6) eingesetzt ist und in welchem ein Ring (16) aus elastischem Material vorgesehen ist, wobei jener Ring (16) derart geformt ist, dass ein Eindringen jenes Zufuhrrohrs (6) in den Ring erfolgt, wenn er in einem inneren Bereich jenes Befestigungsabschnitts (15) gelegen ist, während der Ring gleichzeitig mit dem in ihn eindringenden Zufuhrrohr (6) derart in Eingriff gelangt, dass jener Ring gegen eine äussere Lage gezogen wird, wenn jenes Zufuhrrohr in Entnahmerichtung (B) gezogen wird, und
eine Anschlagfläche (17) für das Zufuhrrohr (6), die in einer solchen Distanz (a) vom sich in seiner inneren Lage im Befestigungsabschnitt (15) befindlichen Ring (16) angeordnet ist, die zumindest zweimal so gross ist wie die Distanz (b), über welche sich der Ring (16) in jenem Befestigungsabschnitt (15) bewegen kann, derart dass, wenn das Zufuhrrohr (6) während des Einsetzen desselben jene Anschlagfläche berührt, ein innerhalb jenes Ringes gelegener Endbereich (6a) jenes Zufuhrrohrs (6) innerhalb jenes Ringes verbleibt wenn der Ring in seine äussere Lage gezogen worden ist, wobei demzufolge ein weiteres Herausziehen jenes Zufuhrrohrs (6) verhindert wird,
**dadurch gekennzeichnet, dass**
der Befestigungsabschnitt (15), in Kombination,
sich in Entnahmerichtung (B) des Zufuhrrohrs (6) verjüngend ausgebildet ist, wobei der Ring (16) infolge der konischen Gestalt des Befestigungsabschnitts (15) deformiert wird, wenn jener Ring (16) gegen seine äussere Lage bewegt wird, so dass jener Ring mit zunehmend grösserer Kraft mit dem Zufuhrrohr (6) in Eingriff gelangt und dieses festhält,
in seinem breitesten Teil (15a) mit einem tassenförmigen Sitz (18) für den Ring (16) versehen ist, wobei die axiale Breite des Sitzes (18) kleiner ist als die Breite desjenigen Abschnitts (16a) des Rings, der mit jenem Sitz (18) in Eingriff steht, und wobei jener Sitz (18) eine innere radiale Kante (19) umfasst, die gegen die Einschubrichtung (A) des Zufuhrrohrs (6) gerichtet ist, und
in seinem schmalsten Teil (15b) mit einer Endfläche (20) versehen ist, die in Bezug auf die Längsachse (1) des Befestigungsabschnitts (15) einen grösseren Winkel (a) aufweist als die konischen Flächen (22) jenes Befestigungsabschnitts (15) hinter jener Endfläche (20).

## Revendications

1. Connecteur pour tuyau qui est raccordé à un tuyau d'amenée d'eaux usées de sorte que le dit tuyau d'amenée (6) et le dit connecteur pour tuyau (5) peuvent se déplacer dans une direction axiale l'un par rapport à l'autre sans se séparer par glissement, le dit connecteur étant raccordé par une entrée latérale (4) à une évacuation de sol (1) et étant constitué de deux éléments (5a et 5b), dans lequel un de ces dits éléments (5a) comprend :
une douille tubulaire (8) ayant un filetage extérieur (9) et une collerette d'extrémité (10), la dite douille (8) étant insérée à travers un orifice d'entrée latéral (4a) de l'évacuation de sol (1) de sorte que la collerette d'extrémité (10) se trouve dans la dite évacuation de sol (1),
et dans lequel l'autre des dits éléments (5b) comprend :
un tronçon de tuyau (11) ayant un filetage intérieur (12), le dit tronçon de tuyau (11) étant vissé sur la douille tubulaire (8) du premier élément (5a) jusqu'à ce que les deux éléments soient bloqués sur l'évacuation de sol (1),
une partie de connexion (15) dans laquelle le tuyau d'amenée (6) est inséré et dans laquelle un anneau (16) de matière élastique est logé, le dit anneau (16) étant formé d'une manière telle que, lorsqu'il est placé dans une région intérieure de la dite partie de connexion (15), l'insertion du dit tuyau d'amenée (6) dans l'anneau est effectuée tandis que l'anneau est en même temps en contact avec le tuyau d'amenée (6) qui y est inséré, de sorte que le dit anneau est tiré vers une position extérieure lorsque le dit tuyau d'amenée est déplacé dans sa direction d'extraction (B), et
une surface de butée (17) pour le tuyau d'amenée (6) qui est située à une distance (a) de l'anneau (16), dans sa position intérieure dans la partie de connexion (15), qui est au moins le double de la distance (b) dont le dit anneau (16) peut se déplacer dans la dite partie de connexion (15) de sorte que, lorsque le tuyau d'amenée (6) pendant son insertion dans l'anneau (16) rencontre la dite surface de butée, une partie d'extrémité (6a)du dit tuyau d'amenée (6) située à l'intérieur du dit anneau reste à l'intérieur du dit anneau lorsque l'anneau a été tiré à sa position extérieure, la poursuite de l'extraction du dit tuyau d'amenée (6) étant ainsi empêchée,
caractérisé en ce que la partie de connexion (15), en combinaison,
est conique et converge dans la direction d'extraction (B) du tuyau d'amenée (6) de sorte que l'anneau (16), du fait de la forme conique de la partie de connexion (15), est déformé lorsque le dit anneau (16) est déplacé vers sa position extérieure, d'une manière telle que le dit anneau vient en prise avec le tuyau d'amenée (6) et le retient avec une force de plus en plus grande,
est pourvue d'un siège en forme de cuvette (18) pour l'anneau (16), dans sa partie la plus large (15a), de sorte que la largeur axiale du siège (18) est plus petite que la largeur de la partie (16a) de l'anneau en contact avec le dit siège (18), et le dit siège (18) comporte un bord radial intérieur (19) qui est tourné dans la direction d'insertion (A) du tuyau d'amenée (6), et
présente une surface d'extrémité (20) dans sa partie la plus étroite (15b), cette surface formant un angle plus grand (α), par rapport à l'axe longitudinal (1) de la partie de connexion (15), que les surfaces coniques (22) de la dite partie de connexion (15) derrière la dite surface d'extrémité (20).
